# FASCICULE DE BREVET EUROPEEN

(11) **EP 3 665 600 B1**
(45) Date de publication et mention de la délivrance du brevet: **21.02.2024**
(21) Numéro de dépôt: 18752610.8
(22) Date de dépôt: 31.07.2018
(51) Int. Cl.: G06F 21/36, G06F 21/64

(54) **PROCÉDÉ DE SIGNATURE ÉLECTRONIQUE D'UN DOCUMENT PAR UNE PLURALITÉ DE SIGNATAIRES**
VERFAHREN ZUR ELEKTRONISCHEN SIGNIERUNG EINES DOKUMENTS DURCH EINE VIELZAHL VON UNTERZEICHNERN
METHOD FOR ELECTRONIC SIGNING OF A DOCUMENT BY A PLURALITY OF SIGNATORIES

(30) Priorité: 09.08.2017 FR 1757596
(43) Date de publication de la demande: 17.06.2020
(73) Titulaire: PHILEOS CONSULTING, 92100 Boulogne-Billancourt (FR)
(72) Inventeur: DEWOST, Philippe, 92100 Boulogne-Billancourt (FR)
(74) Mandataire: IP Trust
(86) Numéro de dépôt international: PCT/FR2018/051968
(87) Numéro de publication internationale: WO 2019/030445

(56) Documents cités:
- WO-A1-2016/128569
- WO-A1-2016/164496
- Anonymous: "With PayToo Your Face Becomes Your Signature", , 13 avril 2017 (2017-04-13), XP055461247, Extrait de l'Internet: URL:https://www.bizjournals.com/prnewswire /press_releases/2017/04/13/MN61608 [extrait le 2018-03-20]
- Anonymous: "How to encourage Active Streets using QR code technology", , 10 octobre 2016 (2016-10-10), XP055461456, Extrait de l'Internet: URL:http://www.health.act.gov.au/sites/def ault/files//IYM%20HTG%20QR%20code%20FINAL% 2023%20Jan%2017.pdf [extrait le 2018-03-21]

## Description

### Domaine technique de l'invention

La présente invention concerne le domaine de la constitution d'une preuve probante du consentement d'une pluralité de signataires sur un document à signer. Plus particulièrement, l'invention s'applique au domaine de la signature électronique de documents, notamment de contrats, pour lesquels la vérification de l'identité et de l'habilitation du signataire est nécessaire, afin d'apporter à chacun la preuve du consentement des autres parties concernées par le document en question. Elle couvre également les signatures de contrats requérant la présence physique simultanée des signataires.

Traditionnellement, après la négociation d'un accord, les différentes parties se réunissent physiquement pour une « cérémonie de signature » au cours de laquelle chacun signe, dans un même intervalle de temps, une série de copies d'un même document, en paraphant chaque page et en signant certaines pages essentielles. Cela permet de conforter chacun dans le fait que les autres parties ont bien marqué leur accord sur le document de référence qu'il a lui-même accepté.

Parfois, plutôt que de parapher chaque page, le document est relié d'une manière irréversible par une « reliure notariée » qui permet de ne signer qu'une page, inséparable des autres pages du documents sauf à détruire la reliure notariée.

Lorsque la réunion physique est impossible, il arrive aussi que la cérémonie de signature se fasse par circularisation de documents signés successivement par chacune des parties. Le document de référence est signé par une première partie qui le transmet à la seconde partie par envoi postal par exemple. La seconde partie ajoute sa signature sur le document déjà signé par la première partie, et ainsi de suite. Le dernier signataire transmet ensuite à chacune des autres parties un exemplaire revêtu de l'ensemble des signatures.

Pour un document électronique, on a proposé dans l'état de la technique différentes solutions présentées ci-après.

### Etat de la Technique Antérieure

La signature électronique repose traditionnellement sur l'application d'une opération cryptographique de chiffrement asymétrique au moyen d'une clé privée appliquée à une empreinte cryptographique du document à signer.

La solidité de la solution repose sur l'hypothèse que la clé privée conserve un caractère réellement secret, soit utilisable exclusivement par le signataire, et que ce dernier soit identifié. Les systèmes à carte à puce sont particulièrement adaptés pour apporter cette assurance.

Malgré la diffusion de masse des cartes à puces, leur usage reste compliqué pour la plupart des utilisateurs, car éloigné des habitudes de la vie courante : la plupart des ordinateurs portables et des smartphones ne sont pas équipés de lecteurs de carte à puce mais disposent en revanche d'une caméra frontale. De plus, la signature manuscrite reste, dans le domaine contractuel, assortie de procédés lourds de « cartons de signature » permettant d'établir, de valider ou de révoquer des habilitations.

Lorsque le document est signé, il reste le problème de la notarisation électronique de documents. La demande de brevet US20150026478 décrit un serveur qui reçoit un paquet de données comprenant: un document destiné à la notarisation, des informations d'identification incluant une photographie, une photographie d'un utilisateur et une signature de l'utilisateur. Le serveur compare la photographie de l'utilisateur à la photographie incluse dans les informations d'identification pour vérifier l'identité de l'utilisateur. Lorsque l'identité est confirmée, le serveur applique la signature et une indication de notarisation au document désigné à la notarisation afin de créer une version notariée du document. Le serveur stocke la version notariée du document, la photographie et les informations d'identification dans un paquet de données sécurisé et fournit la version notariée du document à l'utilisateur.

Cette demande de brevet répond à la question d'attribution de la signature électronique à une seule personne sur un document à signer. Cependant, il manque une méthode de constitution d'une preuve probante des signatures sur un document pour un groupe de signataires.

Une autre solution est présentée dans la demande de brevet internationale WO 2017071581 décrivant un procédé de génération de signature de contrat électronique, consistant :
- à obtenir, par un système de contrat électronique, une image de signature manuscrite d'utilisateur ;
- à obtenir une image de signature intermédiaire ;
- à générer un résumé numérique complet ;
- à générer une première signature numérique, à générer une deuxième signature numérique, et à obtenir un résumé numérique complet chiffré ;
- à envoyer ladite deuxième signature numérique, le résumé numérique complet chiffré et un nombre aléatoire à un mandataire d'estampille temporelle de confiance ;
- à utiliser une seconde clé d'une première paire de clés pour déchiffrer ladite deuxième signature numérique et à comparer le nombre aléatoire obtenu par l'intermédiaire d'un déchiffrement à un nombre aléatoire reçu, de façon à confirmer la validité de l'identité du système de contrat électronique ;
- s'il est confirmé que ladite identité de système de contrat électronique est valide, à utiliser une seconde clé d'une seconde paire de clés pour déchiffrer le résumé numérique complet chiffré ;
- à obtenir une troisième signature numérique et une quatrième signature numérique, ensuite à envoyer la quatrième signature numérique, la troisième signature numérique chiffrée et une estampille temporelle au système de contrat électronique ;
- à obtenir une image de signature finale.

La demande de brevet internationale WO 2017117669 propose une autre solution de l'art antérieur permettant une signature de document électronique, assurant une meilleure authentification du document électronique particulier dans une plate-forme de gestion de contrat électronique. L'individu qui souhaite signer électroniquement un document électronique, peut appliquer au document électronique, sous forme électronique, une représentation graphique numérisée de sa signature physique (dans un format de type graphique vectoriel adaptable (SVG)), et également intégrer un certificat numérique (un certificat numérique X509) de l'individu qui signe sur le document électronique. Le procédé de signature hybride peut incorporer une authentification multifactorielle d'utilisateurs de telle sorte que seuls des utilisateurs authentifiés comme il faut puissent être autorisés à avoir accès à la plate-forme et être autorisés à signer électroniquement les documents électroniques, ce qui permet d'assurer une meilleure sécurité. Les articles en ligne "With PayToo Your Face Becomes Your Signature" et "How to encourage Active Streets using QR code technology" constituent aussi des documents pertinents de l'art antérieur.

### Inconvénients de l'art antérieur

Les solutions de l'art antérieur ne sont pas totalement satisfaisantes car elles nécessitent la mise en oeuvre d'applications dont l'utilisateur ne peut pas percevoir le fonctionnement réel. Il est donc obligé de faire un « acte de foi » sur les effets résultant du traitement appliqué, et sur le niveau de confiance qu'il peut réellement accorder au résultat de cette succession de traitements qu'il ne maîtrise pas directement et dont il ne peut pas percevoir directement les principes et effets. Il lui est en particulier impossible de vérifier directement et objectivement d'éventuelles défaillances ou fraudes, et l'élément probant se traduit généralement par une séquence numérique dont la signification n'est pas directement perceptible.

Malgré la diffusion de masse des solutions cryptographiques, en particulier de celles mettant en oeuvre des cartes à puce, leur usage reste compliqué pour la plupart des utilisateurs, car éloigné des habitudes de la vie courante: la plupart des ordinateurs portables et des téléphones et tablettes ne sont pas équipés de lecteurs de carte à puce mais disposent en revanche d'une caméra frontale. De plus, la signature manuscrite reste, dans le domaine contractuel, assortie de procédés lourds de «cartons de signature» permettant d'établir, de valider ou de révoquer des habilitations.

### Exposé de l'invention

La présente invention est définie par les revendications ci-jointes.

L'invention propose une solution simple et satisfaisante, qui consiste à s'appuyer sur la technique de l'autoportrait (« selfie » en anglais), c'est-à-dire une photo de soi réalisée par soi-même au moyen de la caméra frontale d'un téléphone cellulaire (smartphone en anglais) ou d'une tablette, pour établir le consentement d'un groupe d'individus quant à la mise en oeuvre d'un contrat.

Elle s'appuie optionnellement sur l'état de l'art en matière de reconnaissance faciale (ce qui permet d'identifier les individus et de ce fait d'accéder par des moyens électroniques à leurs attestations d'identité et d'habilitations) et y ajoute les preuves de simultanéité, de présence, et de consentement ainsi que l'objet du consentement.

Le document à signer est communiqué en avance afin de permettre de prendre connaissance et de calculer une empreinte cryptographique au moyen d'un logiciel de visualisation adapté. Une fois le consentement acquis par discussion, les individus peuvent chacun à leur tour prendre un selfie de groupe, où tous les autres participants peuvent afficher l'empreinte cryptographique sur leur propre smartphone.

Le ou les « selfies » sont dûment horodatés et notarisés par le téléphone, dans lequel on a préalablement activé la géolocalisation des photos. La notarisation s'effectue au moyen d'un serveur de notarisation. On dispose ainsi de la preuve du consentement des individus au contrat, la vérification de cohérence et de non-altération des photos pouvant être établie juridiquement par expertise, comme pour une signature manuscrite.

A cet effet, l'invention concerne un procédé de signature électronique d'un document par une pluralité de signataires, comportant une étape d'acquisition d'une photographie de l'un au moins desdits signataires et d'identification dudit signataire à partir de ladite photographie, et une étape d'association dudit document sous une forme numérique avec ledit signataire identifié, caractérisé en ce qu'il comporte :
- une étape de calcul préalable d'un code matriciel par un traitement cryptographique TC appliqué audit document,
   ladite étape d'acquisition d'une photographie consistant à l'acquisition d'une photographie d'au moins un signataire portant un support physique représentant ledit code matriciel,
- une étape de validation :
   o de l'identité du signataire sur la photographie et
   o de validation de la conformité du code matriciel calculé par ledit traitement cryptographique TC appliqué au document détenu par un signataire, avec le code matriciel sur la photographie.

Selon un mode de réalisation, la photographie est prise en présence de l'intégralité des signataires et d'au moins une représentation dudit code matriciel.

Selon un autre mode de réalisation, la photographie est prise en présence d'une partie seulement des signataires et d'au moins une représentation dudit code matriciel, puis transmise aux signataires non présentés sur ladite photographie.

L'invention peut par ailleurs présenter l'un et/ou l'autre des aspects suivants considéré seul ou en combinaison éventuellement multiples :
- chaque signataire calcule avec un équipement personnel le code matriciel par application dudit traitement cryptographique TC au document à signer dont il dispose,
- le code matriciel est calculé par un équipement unique et transmis à chacun des signataires,
- l'étape de validation de l'identité du signataire photographié par le ou les autres signataires est réalisée par reconnaissance automatique de visage,
- l'étape de validation de l'identité du signataire photographié par un signataire est réalisée par l'activation d'une fonction de reconnaissance par le signataire recevant la photographie d'un ou plusieurs autres signataires,
- le signataire ayant réalisé ladite photographie transmet à au moins un autre signataire un fichier numérique contenant la photographie sous une forme numérique, le QR code affiché lors de l'acquisition de ladite photographie,
- fichier numérique comprend en outre une information de géolocalisation du lieu d'acquisition de ladite photographie,
- le fichier numérique comprend en outre une information d'horodatage de l'acquisition de ladite photographie,
- l'étape d'acquisition de ladite photographie comporte l'acquisition d'une séquence vidéo.

### Brève description des figures

D'autres caractéristiques et avantages de l'invention ressortiront à la lecture qui suit d'exemples de réalisation détaillés, en référence aux figures annexées qui représentent respectivement :
- La figure 1 illustre les étapes générales d'un procédé de signature électronique,
- La figure 2 illustre un premier mode de réalisation,
- La figure 3 illustre un deuxième mode de réalisation,

### Description Détaillée des modes de réalisation

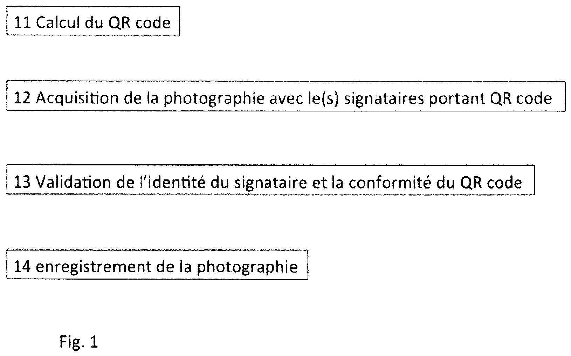

Le procédé de signature électronique d'un document comporte plusieurs étapes comme illustré dans la figure 1.

Une première étape (11) consiste à calculer préalablement une empreinte cryptographique par un traitement cryptographique TC appliqué à un document à signer (par exemple, un accord, un document ou un contrat). L'empreinte cryptographique peut être réalisée à l'aide d'un algorithme classique de hachage reconnu pour la signature électronique, comme SHA2 ou SHA3. Cette empreinte peut être affichée sur l'écran d'un téléphone ou d'une tablette, ou imprimée sur un papier au moyen d'un codage de type QR-Code ou un code matriciel équivalent. Un QR code du contrat est calculé soit indépendamment par chaque signataire avec son téléphone personnel, soit collectivement par un équipement unique et puis transmis au téléphone de chaque signataire.

Lorsque le QR code est calculé individuellement par chaque signataire, chacun est assurée sur le fait que le document qu'il a soumis au traitement cryptographique TC est bien celui qu'il a lu et approuvé, et que le traitement cryptographique TC n'a pas été fraudé puisqu'il s'agit de son propre équipement, exécutant une application dont il a la maîtrise.

Lorsque le QR code est calculé par une ressource commune, chacun des signataires est assuré qu'il est associé au même document. Il peut par ailleurs, si nécessaire, vérifier que ce document est bien celui qu'il avait lu et approuvé en appliquant le traitement cryptographique TC sur un document en sa possession, et en le comparant avec le QR code calculé par la ressource commune.

Une deuxième étape (12) consiste à prendre une photographie de la totalité des signataires portant le QR code calculé. Cette photographie peut être réalisée par l'un des signataires sous la forme d'un autoportrait du groupe des signataires portant chacun une représentation du QR code associé au document, par exemple sur l'écran d'une tablette ou d'un téléphone tenu en main par un ou plusieurs signataires, soit sur un document sur lequel le QR code est imprimé.

Une troisième étape (13) consiste à valider les identités des signataires et le QR code des documents apparaissant dans la photographie. Cette validation peut être réalisée soit manuellement par un action sur une interface présentant la photographie ainsi que des zones de validation ou de rejet permettant à une partie de commander l'enregistrement d'une information correspondant soit à la reconnaissance et l'identification des autres signataires (acquittement par une commande de type « OK ») soit à la non-reconnaissance d'un ou plusieurs signataire (rejet par une commande de type « NON »).

Une quatrième étape (14) est d'enregistrer et de signer la photographie comme une preuve dans un registre au serveur de notarisation.

Le serveur de notarisation peut être opéré par un prestataire de confiance, ou s'appuyer sur un système de notarisation collaboratif de type « blockchain ». Plusieurs systèmes de notarisation peuvent être utilisés conjointement pour renforcer la preuve. La demande d'invention s'étend aux cas de figure dans lequel le « selfie » peut être remplacé ou complété par une courte séquence vidéo, avec ou sans enregistrement sonore, de façon à rendre la contrefaçon de la cérémonie de signature encore plus difficile.

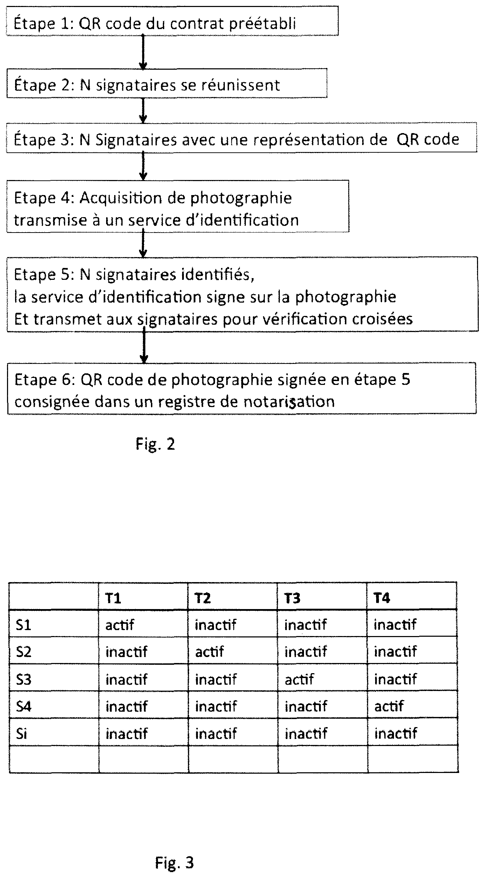

La figure 2 montre un premier exemple qui n'est pas couvert par la portée de la présente invention selon la revendication indépendante 1.

Un QR code du contrat est mis à la disposition de chaque signataire. Les N signataires se réunissent au même endroit pour donner leurs consentements. Ils prennent une photographie avec l'intégralité des signataires, dont au moins un portant une représentation du QR code du contrat. Ensuite, la photographie est transmise à un service tiers d'identification qui permet d'attester l'identité par la reconnaissance automatique de visage. Lorsque les N signataires sont identifiés, le service tiers d'identification signe sur la photographie. Le résultat d'identification avec la photographie signée est retourné vers chaque signataire pour la confirmation. En même temps, une comparaison du QR code est également réalisée sur le téléphone de chaque signataire afin de vérifier que le QR code dans la photographie est identique à celui tenu par chaque signataire. Lorsque le QR code et l'identité de chaque signataire sont confirmés, au moins une signature d'au moins un signataire est remise et la photographie peut directement être enregistrée comme preuve.

Il est également possible d'appliquer une fonction de hachage sur la photographie pour obtenir un QR code associé à la photographie comme une preuve. La preuve est consignée dans un registre, soit opéré par un tiers de confiance, soit de type public décentralisé (comme la blockchain du Bitcoin ou celle d'Ethereum ou tout autre architecture de registre de transactions décentralisé désigné comme une blockchain).

La figure 3 montre un deuxième mode de réalisation du procédé de signature électronique. Dans ce mode de réalisation, l'ensemble des signataires ne peut pas se réunir au même endroit. Sous cette condition, un ordre de réalisation des signatures est préétabli et accepté par l'ensemble des signataires. Selon l'ordre de signature, chaque signataire (S1, S2, S3, S4, Si...) est basculé entre les états actif/inactif au moment T1, T2, T3, T4 et Ti...

A l'état actif, un signataire est autorisé à réaliser l'étape de validation, l'étape d'acquisition de la photographie, et l'étape d'envoi de cette photographie aux autres. A l'état inactif, un signataire est limité à observer le développement du procédé de signature électronique.

Avant le moment T1, le signataire S1 est en état actif, qui permet de prendre une photographie «selfie» de son visage avec le QR code du contrat qu'il tient et de l'envoyer aux autres signataires. L'envoi de cette photographie vaut la signature électronique du consentement de S1.

S1 possède un droit de rétraction jusqu'au moment T1, avant lequel tous les autres signataires sont en état inactif. Après le moment T1, S1 est basculé en état inactif et S2 entre en état actif, tandis que les états des autres ne changent pas.

Lorsque S2 a reçu et reconnu la personne dans la photographie envoyée par S1, S2 confirme l'identité de la personne sur la photographie. Cette confirmation permet de lancer la comparaison du QR code dans la photographie à son propre QR code stocké dans son téléphone. La confirmation du QR code lui permet de commencer l'étape de la prise d'une photographie «selfie«. La photographie de visage de S2 est ajoutée sur la photographie de S1 avec le même QR code afin de former une preuve de consentement de ces deux personnes sur le même document. La photographie avec deux visages est envoyée aux autres signataires. L'envoi de cette photographie vaut la signature électronique de consentement de S2. Jusqu'au moment T2, S2 possède un droit de rétraction et tous les autres signataires sont en état inactif. Après le moment T2, S2 est basculé en état inactif et S3 entre en état actif, tandis que les états des autres ne changent pas.

S3 et les autres signataires suivants répètent l'étape de validation, l'étape d'acquisition de la photographie, et l'étape d'envoi de cette photographie aux autres selon les règles susvisées. Ce procédé permet à tout le mode de participer et de témoigner le développement de signature électronique.

Dans ce deuxième mode de réalisation, les moments T1, T2 et T3 peuvent être des heures fixées. Il est également possible de prendre le moment d'envoyer la photographie comme le moment Ti afin de basculer les états des signataires sans attendre.

Le dernier signataire envoie la photographie, dans laquelle les visages de l'ensemble des signataires avec un QR code sont présentés, au service tiers. Le service tiers peut signer sur cette photographie. Une empreinte de hachage de la photographie ainsi signée est consignée dans un registre, soit opéré par un tiers de confiance, soit de type public décentralisé (comme la blockchain du Bitcoin ou celle d'Ethereum ou tout autre architecture de registre de transactions décentralisé), qui permet de certifier la validité des signatures du contrat et ainsi de rendre le processus auditable et opposable.

Par ailleurs, l'étape d'acquisition de la photographie comporte l'acquisition d'une séquence vidéo. Ainsi, la validation des identités des signataires peut utiliser tous types de méthode d'identification : faciale, vocale, empreinte digitale s'appuyant sur une base de données privée ou publique. Il est également possible de vérifier l'habilitation des signataires par une communication avec des bases de données des entreprises qu'ils représentent.

### Exemple de mise en oeuvre avec une réunion physique des signataires

L'exemple suivant, qui n'est pas couvert par la portée de la présente invention selon la revendication indépendante 1, dans le cas où tous les signataires se réunissent physiquement comprend les étapes suivantes :
Etape 1 : les n signataires d'un accord / document / contrat se réunissent. Au moins l'un d'entre eux est équipé d'un téléphone ou d'une tablette disposant d'une caméra frontale d'une résolution suffisante pour permettre d'exécuter une reconnaissance faciale sur les n visages.
Etape 2 : une empreinte de hash du contrat à signer est mise à disposition des signataires sous la forme d'un QR code, soit imprimé, soit généré directement par leur téléphone disposant d'un logiciel de visualisation du document, soit reçu par le téléphone par un moyen de transmission habituel (par exemple MMS ou email).
Etape 3 : l'un des n signataires s'assure que son téléphone est en capacité de prendre des« selfies », de les géolocaliser, et demande aux n-1 autres d'afficher le QR Code du contrat auquel ils consentent sur leurs téléphones respectifs en vue de le rendre visible sur le « selfie ».
Etape 4: le « selfie » est réalisé (variante : il s'agit d'une séquence vidéo) et produit un fichier image contenant des métadonnées parmi lesquelles l'horodatage et les coordonnées GPS de l'image, d'éventuels identifiants du terminal permettant en cas de besoin de le rattacher à son propriétaire, ... - il est transmis par tout moyen de transmission électronique à un service tiers d'identification / authentification (notamment faciale) permettant d'attester l'identité des signataires du « contrat » et de ce fait, leur présence simultanée en un même lieu et leur consentement éclairé à procéder à la signature.
Etape 5 : Le service tiers, une fois établie l'identification des signataires, signe à son tour l'image enrichie des métadonnées d'identification et la transmet aux signataires pour vérification croisées, si nécessaire, des habilitations à signer de chacun
Etape 6 : une empreinte de hash de l'image signée à l'étape 5 est consignée dans un registre, soit opéré par un tiers de confiance, soit de type public décentralisé (comme la blockchain de Bitcoin ou celle d'Ethereum ou tout autre architecture de registre de transactions décentralisé) qui permet d'horodater et de certifier la signature valide du contrat et ainsi de rendre le processus auditable et opposable.

## Revendications

1. Procédé de signature électronique d'un document par une pluralité de signataires, comportant une étape d'acquisition d'une photographie d'au moins l'un desdits signataires et d'identification dudit signataire à partir de ladite photographie, et une étape d'association dudit document sous une forme numérique avec ledit signataire identifié, le procédé comporte:
- une étape de calcul préalable d'un code matriciel par un traitement cryptographique TC appliqué audit document,
- ladite étape d'acquisition d'une photographie consistant à l'acquisition d'une photographie d'au moins un premier signataire portant un support physique représentant ledit code matriciel,
- une étape de validation :
o de l'identité du premier signataire sur la photographie et
o de la conformité du code matriciel calculé par ledit traitement cryptographique TC appliqué au document détenu par au moins un deuxième signataire, avec le code matriciel sur la photographie porté par le premier signataire.
- Ladite étape d'association consistant à une remise de signature d'au moins l'un desdits signataires sur ledit document, dans laquelle la photographie de visage du deuxième signataire est ajoutée sur la photographie du premier signataire avec le même code matriciel, de sorte que le procédé constitue une preuve probante du consentement desdits signataires sur ledit document par l'association de ladite signature sur ledit document.

2. Procédé de signature électronique d'un document par une pluralité de signataires selon la revendication 1 **caractérisé en ce que** ladite photographie est prise en présence de l'intégralité des signataires et d'au moins une représentation dudit code matriciel.

3. Procédé de signature électronique d'un document par une pluralité de signataires selon la revendication 1 **caractérisé en ce que** ladite photographie est prise en présence d'une partie seulement des signataires et d'au moins une représentation dudit code matriciel, puis transmise aux signataires non présents sur ladite photographie.

4. Procédé de signature électronique d'un document par une pluralité de signataires selon la revendication 1 **caractérisé en ce que** chaque signataire calcule avec un équipement personnel le code matriciel par application dudit traitement cryptographique TC au document à signer qu'il dispose.

5. Procédé de signature électronique d'un document par une pluralité de signataires selon la revendication 1 **caractérisé en ce que** ledit code matriciel est calculé par un équipement unique et transmis à chacun des signataires.

6. Procédé de signature électronique d'un document par une pluralité de signataires selon la revendication 1 **caractérisé en ce que** ladite étape de validation de l'identité du signataire photographié par le ou les autres signataires est réalisée par reconnaissance automatique de visage.

7. Procédé de signature électronique d'un document par une pluralité de signataires selon la revendication 3 **caractérisé en ce que** ladite étape de validation de l'identité du signataire photographié par un signataire est réalisée par l'activation d'une fonction de reconnaissance par le signataire recevant la photographie d'un ou plusieurs autres signataires.

8. Procédé de signature électronique d'un document par une pluralité de signataires selon la revendication 3 **caractérisé en ce que** le signataire ayant réalisé ladite photographie transmet, à au moins un autre signataire un fichier numérique contenant la photographie sous une forme numérique, le code code matriciel affiché lors de l'acquisition de ladite photographie.

9. Procédé de signature électronique d'un document par une pluralité de signataires selon la revendication précédente **caractérisé en ce que** ledit fichier numérique comprend en outre une information de géolocalisation du lieu d'acquisition de ladite photographie.

10. Procédé de signature électronique d'un document par une pluralité de signataires selon la revendication 8 **caractérisé en ce que** ledit fichier numérique comprend en outre une information d'horodatage de l'acquisition de ladite photographie.

11. Procédé de signature électronique d'un document par une pluralité de signataires selon la revendication 1 **caractérisé en ce que** ladite étape d'acquisition de ladite photographie comporte l'acquisition d'une séquence vidéo.

## Patentansprüche

1. Verfahren für eine elektronische Signatur eines Dokuments durch eine Vielzahl von Unterzeichnern, umfassend einen Schritt eines Erfassens eines Lichtbilds von mindestens einem der Unterzeichner und eines Identifizierens des Unterzeichners anhand des Lichtbilds, und einen Schritt eines Zuordnens des Dokuments in einer digitalen Form zu dem identifizierten Unterzeichner, wobei das Verfahren aufweist:
- einen Schritt eines vorherigen Berechnens eines Matrixcodes durch eine kryptografische Verarbeitung TC, die auf das Dokument angewendet wird,
- den Schritt des Erfassens eines Lichtbilds, der aus der Erfassung eines Lichtbilds von mindestens einem ersten Unterzeichner, das einen physischen Träger trägt, der den Matrixcode darstellt, besteht,
- einen Schritt eines Validierens:
o der Identität des ersten Unterzeichners auf dem Lichtbild und
o der Übereinstimmung des Matrixcodes, der durch die kryptografische Verarbeitung TC berechnet wird, die auf das Dokument, über das mindestens ein zweiter Unterzeichner verfügt, angewendet wird, mit dem Matrixcode auf dem Lichtbild des ersten Unterzeichners,
- wobei der Zuordnungsschritt aus einer Übergabe der Unterschrift von mindestens einem der Unterzeichner auf dem Dokument besteht, wobei das Lichtbild eines Gesichts des zweiten Unterzeichners mit demselben Matrixcode auf dem Lichtbild des ersten Unterzeichners hinzugefügt wird, so dass das Verfahren einen aussagekräftigen Beweis der Zustimmung der Unterzeichner auf dem Dokument durch die Zuordnung der Unterschrift auf dem Dokument bildet.

2. Verfahren für eine elektronische Signatur eines Dokuments durch eine Vielzahl von Unterzeichnern nach Anspruch 1, **dadurch gekennzeichnet, dass** das Lichtbild in Anwesenheit der Gesamtheit der Unterzeichner und mindestens einer Darstellung des Matrixcodes aufgenommen wird.

3. Verfahren für eine elektronische Signatur eines Dokuments durch eine Vielzahl von Unterzeichnern nach Anspruch 1, **dadurch gekennzeichnet, dass** das Lichtbild in Anwesenheit nur eines Teils der Unterzeichner und mindestens einer Darstellung des Matrixcodes aufgenommen und dann an die Unterzeichner, die auf dem Lichtbild nicht anwesend sind, übermittelt wird.

4. Verfahren für eine elektronische Signatur eines Dokuments durch eine Vielzahl von Unterzeichnern nach Anspruch 1, **dadurch gekennzeichnet, dass** jeder Unterzeichner mit einer persönlichen Einrichtung den Matrixcode durch Anwendung der kryptografischen Verarbeitung TC auf das zu unterzeichnende Dokument, über das er verfügt, berechnet.

5. Verfahren für eine elektronischen Signatur eines Dokuments durch eine Vielzahl von Unterzeichnern nach Anspruch 1, **dadurch gekennzeichnet, dass** der Matrixcode durch eine einzige Einrichtung berechnet und an jeden der Unterzeichner übermittelt wird.

6. Verfahren für eine elektronische Signatur eines Dokuments durch eine Vielzahl von Unterzeichnern nach Anspruch 1, **dadurch gekennzeichnet, dass** der Schritt des Validierens der Identität des Unterzeichners, der durch den oder die anderen Unterzeichner fotografiert wurde, durch automatische Gesichtserkennung durchgeführt wird.

7. Verfahren für eine elektronische Signatur eines Dokuments durch eine Vielzahl von Unterzeichnern nach Anspruch 3, **dadurch gekennzeichnet, dass** der Schritt des Validierens der Identität des Unterzeichners, der durch einen Unterzeichner fotografiert wurde, durch die Aktivierung einer Erkennungsfunktion durch den Unterzeichner, der das Lichtbild eines oder mehrerer anderer Unterzeichner empfängt, durchgeführt wird.

8. Verfahren für eine elektronische Signatur eines Dokuments durch eine Vielzahl von Unterzeichnern nach Anspruch 3, **dadurch gekennzeichnet, dass** der Unterzeichner, der das Lichtbild erstellt hat, an mindestens einen anderen Unterzeichner eine digitale Datei übermittelt, die das Lichtbild in einer digitalen Form enthält, wobei der Matrixcode bei der Erfassung des Lichtbilds angezeigt wird.

9. Verfahren für eine elektronische Signatur eines Dokuments durch eine Vielzahl von Unterzeichnern nach dem vorstehenden Anspruch,
**dadurch gekennzeichnet, dass** die digitale Datei ferner eine Information zur Geolokalisierung des Ortes der Erfassung des Lichtbilds umfasst.

10. Verfahren für eine elektronische Signatur eines Dokuments durch eine Vielzahl von Unterzeichnern nach Anspruch 8, **dadurch gekennzeichnet, dass** die digitale Datei ferner eine Zeitstempelinformation über die Erfassung des Lichtbilds umfasst.

11. Verfahren für eine elektronische Signatur eines Dokuments durch eine Vielzahl von Unterzeichnern nach Anspruch 1, **dadurch gekennzeichnet, dass** der Schritt des Erfassens des Lichtbilds die Erfassung einer Videosequenz aufweist.

## Claims

1. Method for electronically signing a document by a plurality of signatories, comprising a step of acquiring a photograph of at least one of said signatories and identifying said signatory from said photograph, and a step of associating said document in a digital form with said identified signatory, the method comprising:
- a step of calculating a matrix code in advance by a cryptographic processing TC applied to said document,
- said step of acquiring a photograph consisting of acquiring a photograph of at least one first signatory bearing a physical medium representing said matrix code,
- a step of validating:
∘ the identity of the first signatory in the photograph and
∘ the compliance of the matrix code calculated by said cryptographic processing TC applied to the document held by at least one second signatory, with the matrix code in the photograph borne by the first signatory.
- said association step consisting in providing the signature of at least one of said signatories on said document, wherein the photograph of the face of the second signatory is added to the photograph of the first signatory with the same matrix code, such that the method constitutes conclusive evidence of the consent of said signatories to said document by the association of said signature on said document.

2. Method for electronically signing a document by a plurality of signatories according to claim 1, **characterized in that** said photograph is taken in the presence of all the signatories and of at least one depiction of said matrix code.

3. Method for electronically signing a document by a plurality of signatories according to claim 1, **characterized in that** said photograph is taken in the presence of only some of the signatories and at least one depiction of said matrix code, then transmitted to the signatories not present in said photograph.

4. Method for electronically signing a document by a plurality of signatories according to claim 1, **characterized in that** each signatory calculates with a personal device the matrix code by applying said cryptographic processing TC to the document to be signed that they have at their disposal.

5. Method for electronically signing a document by a plurality of signatories according to claim 1, **characterized in that** said matrix code is calculated by a single device and transmitted to each of the signatories.

6. Method for electronically signing a document by a plurality of signatories according to claim 1, **characterized in that** said step of validating the identity of the signatory photographed by the other signatory or signatories is carried out by automatic facial recognition.

7. Method for electronically signing a document by a plurality of signatories according to claim 3, **characterized in that** said step of validating the identity of the signatory photographed by a signatory is carried out by activating a recognition function by the signatory receiving the photograph of one or more other signatories.

8. Method for electronically signing a document by a plurality of signatories according to claim 3, **characterized in that** having taken said photograph, the signatory transmits, to at least one other signatory, a digital file containing the photograph in a digital form, the matrix code displayed when the photograph was acquired.

9. Method for electronically signing a document by a plurality of signatories according to the preceding claim, **characterized in that** said digital file further comprises an item of geolocation information of the acquisition location of said photograph.

10. Method for electronically signing a document by a plurality of signatories according to claim 8, **characterized in that** said digital file further comprises timestamping information for the acquisition of said photograph.

11. - Method for electronically signing a document by a plurality of signatories according to claim 1, **characterized in that** said step of acquiring said photograph comprises acquiring a video sequence.
